# EUROPEAN PATENT APPLICATION

(11) **EP 2 219 281 A2**
(43) Date of publication of application: **18.08.2010**
(21) Application number: 10153247.1
(22) Date of filing: 11.02.2010
(51) Int. Cl.: H02J 7/00

(54) **Circuit and method for cell balancing**

(30) Priority: 11.02.2009 US 378235
(71) Applicant: O2 Micro, Inc., Santa Clara, CA 95054 (US)
(72) Inventor: Densham, William, Los Gatos, CA 95032 (US); Xiao, Anquan, 201203, Shanghai (CN); Gong, Xiaogei, 201203, Shanghai (CN)
(74) Representative: Lippert, Stachow & Partner

(57) **Abstract**

According to one embodiment of the invention, there is provided a cell balancing circuit used for balancing a plurality of cells comprising a first cell and a second cell adjacent to the first cell. The cell balancing circuit includes a first shunt path coupled to the first cell in parallel for enabling a shunt current of the first cell, a second shunt path coupled to the second cell in parallel for enabling a shunt current of the second cell. The cell balancing circuit further includes a controller which is coupled to the first shunt path and the second shunt path. The controller is operable for alternately conducting the first shunt path and the second shunt path if the first cell and the second cell are unbalanced.

## Description

### RELATED APPLICATIONS

This application is a continuation-in-part of the co-pending U.S. application, Serial Number 12/005,507, titled "Battery Cell Balancing Systems Using Current Regulators", filed on December 27, 2007, which itself claims priority to U.S. Provisional Application Number 60/998,104, filed on October 9, 2007, which is hereby incorporated by reference in its entirety.

### BACKGROUND

Used as a DC voltage power supply, a typical Lithium-Ion (Li-Ion) battery pack usually includes a group of battery cells connected in series. Charging and discharging the battery pack through normal operation overtime may result in cell-to-cell variations in cell voltages. When one or more cells in a series string charge faster or slower than the others, an unbalanced condition may occur.

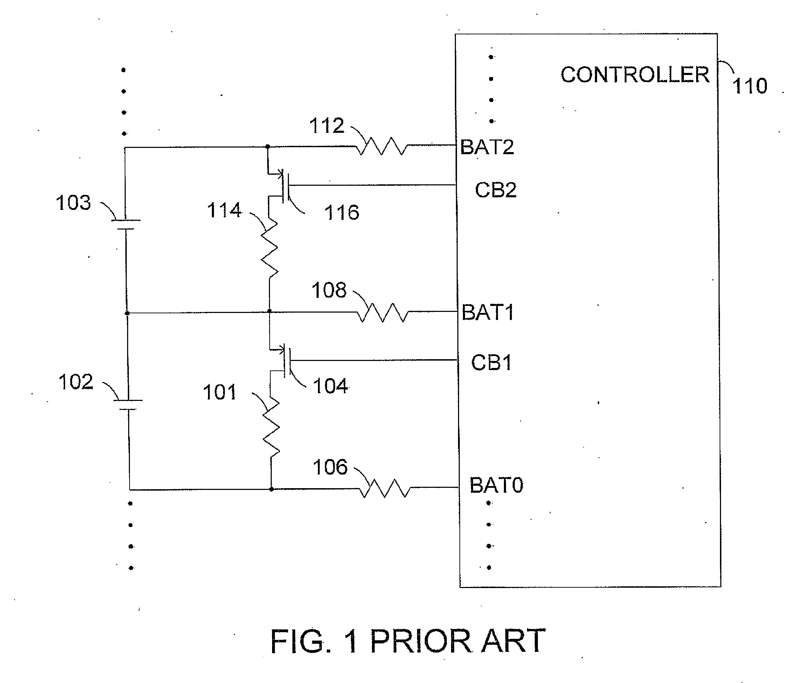

FIG. 1 illustrates a conventional cell balancing circuit. Multiple cells connected in series include a first cell 102 and a second cell 103. The positive terminal (anode) of the cell 102 is coupled to a controller 110 at a terminal BAT1 through a resistor 108. The negative terminal (cathode) of the cell 102 is coupled to the controller 110 at a terminal BAT0 through a resistor 106. An external shunt path (bypass path) is parallel-connected with the cell 102. The shunt path can include a current limiting resistor 101 and a bleeding control switch 104 connected in series with the current limiting resistor 101. The bleeding control switch 104 is controlled by the controller 110 via a dedicated pin CB1. Similarly, the positive terminal of the cell 103 is coupled to the controller 110 at the terminal BAT2 through a resistor 112. The negative terminal of the cell 103 is coupled to the controller 110 at the terminal BAT1 through the resistor 108. An external shunt path is parallel-connected with the cell 103. The shunt path can include a current limiting resistor 114 and a bleeding control switch 116 connected in series with the current limiting resistor 114. The bleeding control switch 116 is controlled by the controller 110 via a dedicated pin CB2.

When an unbalanced condition occurs, for example, when a voltage of the cell 102 is greater than that of any other cell in the battery pack, the controller 110 may turn on the switch 104 to enable a shunt current to flow through the external shunt path, thus charging of the cell 102 can be slowed down and the cell voltages can be balanced in the battery pack. One of the disadvantages of this method is that each cell needs an extra pin (e.g., CB1 for cell 102, CB2 for cell 103) to control a corresponding bleeding control switch, which can increase the cost.

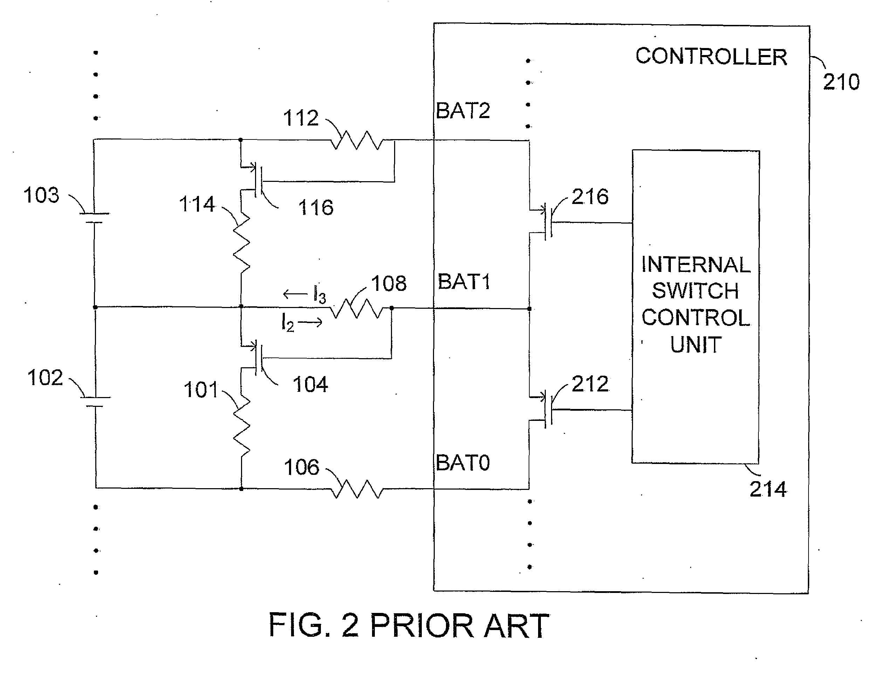

FIG. 2 shows another conventional cell balancing circuit. Elements labeled the same as in FIG. 1 have similar functions. In the controller 210, an internal switch 212 is coupled between the terminal BAT1 and the terminal BAT0. An internal switch 216 is coupled between the terminal BAT2 and the terminal BAT1. Internal switch 212 and internal switch 216 are under control of an internal switch control unit 214 which is also located in the controller 210.

In FIG. 2, in order to conduct the shunt path of the cell 102, the internal switch 212 needs to be turned on in order to enable a current I2 flowing from the positive terminal of the cell 102 through the resistor 108, terminal BAT1 and internal switch 212 to the terminal BAT0, then through the resistor 106 to the negative terminal of the cell 102. In order to conduct the shunt path of the cell 103, the internal switch 216 needs to be turned on in order to enable a current 13 flowing from a positive terminal of the cell 103, through the resistor 112 to the terminal BAT2 and internal switch 216 to the terminal BAT1, then through the resistor 108 to the negative terminal of the cell 103. As a result, there may be a confliction of the current direction regarding the current flowing through the resistor 108. Since I2 and I3 flow in opposite directions, if the level of I2 and the level of I3 are the same, the voltage drop across the resistor 108 will be zero such that the bleeding control switch 116 can not be turned on. Therefore, this method may not be suitable for balancing a group of series-connected cells.

### SUMMARY

According to one embodiment of the invention, there is provided a cell balancing circuit used for balancing a plurality of cells including a first cell and a second cell adjacent to the first cell. The cell balancing circuit includes a first shunt path coupled to the first cell in parallel for enabling a shunt current of the first cell, a second shunt path coupled to the second cell in parallel for enabling a shunt current of the second cell. The cell balancing circuit further includes a controller which is coupled to the first shunt path and the second shunt path. The controller is operable for alternately conducting the first shunt path and the second shunt path if the first cell and the second cell are unbalanced. Further, said controller may be operable for conducting said first shunt path in a first series of discrete time slots, and for conducting said second shunt path in a second series of discrete time slots, wherein said first series of discrete time slots and said second series of discrete time slots are mutually exclusive. Further, said controller may be operable for conducting said first shunt path and cutting off said second shunt path in a first time slot, and for cutting off said first shunt path and conducting said second shunt path in a second time slot. Moreover, said controller may further comprise a first switch coupled to said first shunt path for controlling a conductance status of said first shunt path by enabling a first control current flowing through said first switch; a second switch coupled to said second shunt path for controlling a conductance status of said second shunt path by enabling a second control current flowing through said second switch, wherein said controller is operable for alternately turning on said first internal switch and said second switch. Further, said cell balancing circuit may further comprise a first resistor coupled between said first shunt path and said first internal switch, wherein said first control current flows through said first resistor to produce a voltage drop on said first resistor, and wherein a conductance status of said first shunt path is determined by said voltage drop. Moreover, in said cell balancing circuit, said first shunt path may further comprise a bleeding control switch, and wherein a conductance status of said bleeding control switch is determined by said voltage drop.
In a second embodiment, a battery management system comprises a charger for charging a plurality of cells comprising a first cell and a second cell adjacent to said first cell; a monitoring circuit coupled to said cells for monitoring said cells and for detecting an unbalanced condition of said cells; and a cell balancing circuit coupled to said monitoring circuit for balancing said cells, said cell balancing circuit comprising: a first shunt path coupled to said first cell in parallel for enabling a shunt current of said first cell; a second shunt path coupled to said second cell in parallel for enabling a shunt current of said second cell; and a controller coupled to said first shunt path and said second shunt path and operable for alternately conducting said first shunt path and said second shunt path if said first cell and said second cell are unbalanced. Further, said controller may be operable for conducting said first shunt path in a first series of discrete time slots, and for conducting said second shunt path in a second series of discrete time slots, wherein said first series of discrete time slots and said second series of discrete time slots are mutually exclusive. Further said controller may be operable for conducting said first shunt path and cutting off said second shunt path in a first time slot, and for cutting off said first shunt path and conducting said second shunt path in a second time slot. Moreover, said controller may further comprise a first switch coupled to said first shunt path for controlling a conductance status of said first shunt path by enabling a first control current flowing from a positive terminal of said first cell through said first switch to a negative terminal of said first cell; a second switch coupled to said second shunt path for controlling a conductance status of said second shunt path by enabling a second control current flowing from a positive terminal of said second cell through said second switch to a negative terminal of said second cell, wherein said controller is operable for alternately turning on said first switch and said second switch. Said battery management system may further comprise a first resistor coupled between said first shunt path and said first internal switch, wherein said first control current flows through said first resistorto produce a voltage drop on said first resistor, and wherein a conductance status of said first shunt path is determined by said voltage drop. Further, in said battery management system, said first shunt path may comprise a bleeding control switch, and wherein a conductance status of said bleeding control switch is determined by said voltage drop.

In a third embodiment, a method for balancing a plurality of cells comprises: dividing said plurality of cells into a first group and a second group, wherein each cell from said first group is adjacent to at least one cell from said second group; monitoring an unbalanced condition of said plurality of cells; and alternately enabling shunt current for a first plurality of unbalanced cells from said first group and shunt current for a second plurality of unbalanced cells from said second group. Moreover, said method further may comprise balancing said first plurality of unbalanced cells from said first group in a first series of discrete time slots; and balancing said second plurality of unbalanced cells from said second group in a second series of discrete time slots, wherein said first series of discrete time slots and said second series of discrete time slots are mutually exclusive. Said method may further comprise conducting a plurality of shunt paths respectively coupled to said first plurality of unbalanced cells from said first group in a first series of discrete time slots; and conducting a plurality of shunt paths respectively coupled to said second plurality of unbalanced cells from said second group in a second series of discrete time slots, wherein said first series of discrete time slots and said second series of discrete time slots are mutually exclusive. Said method may further comprise alternately enabling a first control current corresponding to a first cell and a second control current corresponding to a second cell; conducting a first shunt path coupled to said first cell in response to said first control current; and conducting a second shunt path coupled to said second cell in response to said second control current. Said method may further comprise producing a voltage drop on a resistor coupled to said first shunt path by said first control current, wherein said first control current flows through said resistor. Said method may further comprise turning on a bleeding control switch in said first shunt path in response to said voltage drop to conduct said first shunt path. Said method may further comprise determining a cell is unbalanced if a voltage of said cell is greater than a predetermined threshold. Said method may further comprise determining a cell is unbalanced if a voltage difference between a first cell voltage of said cell and a second cell voltage of another cell is greater than a predetermined threshold.

### BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 illustrates a conventional cell balancing circuit using a dedicated pin to enable or disable a shunt path.

FIG. 2 illustrates another conventional cell balancing circuit with a bleeding control switch controlled by an internal switch.

Fig. 3 illustrates an electrical system, in accordance with one embodiment of the present invention.

FIG. 4 illustrates a cell balancing circuit, in accordance with one embodiment of the present invention.

FIG. 5 illustrates a cell balancing circuit, in accordance with one embodiment of the present invention.

FIG. 6 illustrates a cell balancing circuit for balancing a group of cells, in accordance with one embodiment of the present invention.

FIG. 7 illustrates a cell balancing circuit for balancing a group of cells, in accordance with one embodiment of the present invention.

FIG. 8 illustrates a flowchart of a method for balancing a cell, in accordance with one embodiment of the present invention.

FIG. 9 illustrates a cell balancing circuit, in accordance with one embodiment of the present invention.

FIG. 10 illustrates a time multiplex algorithm used by the controller in FIG. 9.

FIG. 11 illustrates a battery management system, in accordance with one embodiment of the present invention.

FIG. 12 illustrates a flowchart of a method for balancing a plurality of cells, in accordance with one embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Embodiments described herein may be discussed in the general context of computer-executable instructions residing on some form of computer-usable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "dividing", "monitoring", "enabling", "balancing", "conducting", "producing", "turning on", "determining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information.

Communication media can embody computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared and other wireless media. Combinations of any of the above should also be included within the scope of computer-readable media.

Furthermore, in the following detailed description of the present invention, numerous specific details are set forth in order to provide a thorough understanding of the present invention. However, it will be recognized by one of ordinary skill in the art that the present invention may be practiced without these specific details. I n other instances, well known methods, procedures, components, and circuits have not been described in detail as not to unnecessarily obscure aspects of the present invention.

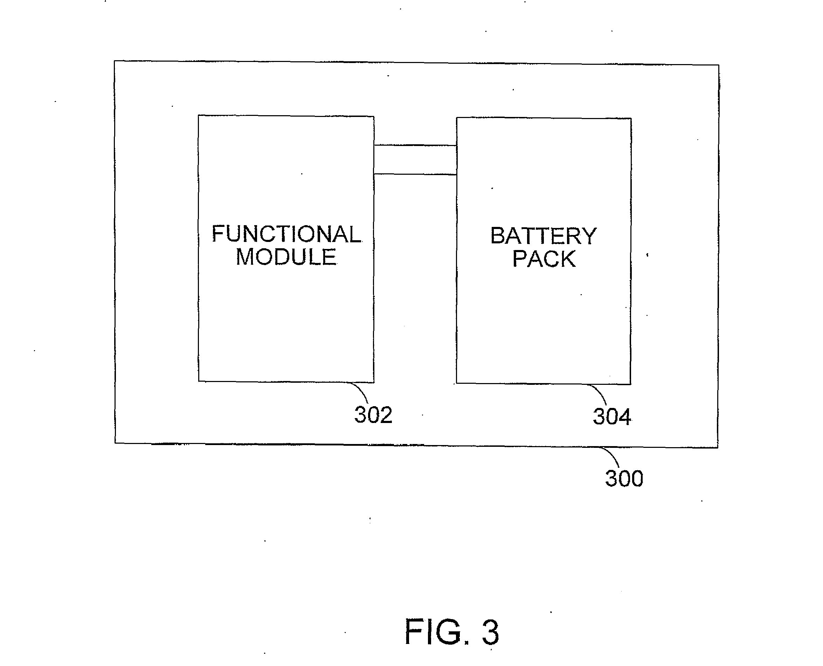

FIG. 3 illustrates an electrical system 300 including a functional module 302 and a battery pack 304. The battery pack 304 includes a group of battery cells. The functional module 302 is powered by the battery pack 304 and can perform one or more functions. The electrical system 300 can include, but is not limited to, a computer system, a vehicle, an electrical bike, an uninterruptible power supply, etc. In one embodiment, the functional module 302 includes a central processing unit (CPU) of a computer system. In one embodiment, the functional module 302 includes a vehicle motor of a vehicle.

According to one embodiment of the present invention, it is provided a battery cell balancing circuit for the battery pack 304, which reduces pin numbers and can be operable even if a battery cell voltage is relatively low. The cell balancing circuit uses a current regulator to control a shunt path of a battery cell, in one embodiment. Advantageously, a bleeding control switch for conducting a shunt path of a battery cell can have various types and is not limited to a switch with a relatively low threshold voltage (e.g., 1 V). Furthermore, in one embodiment, the battery cell balancing circuit is able to balance multiple cells simultaneously, e.g., to balance neighboring cells simultaneously.

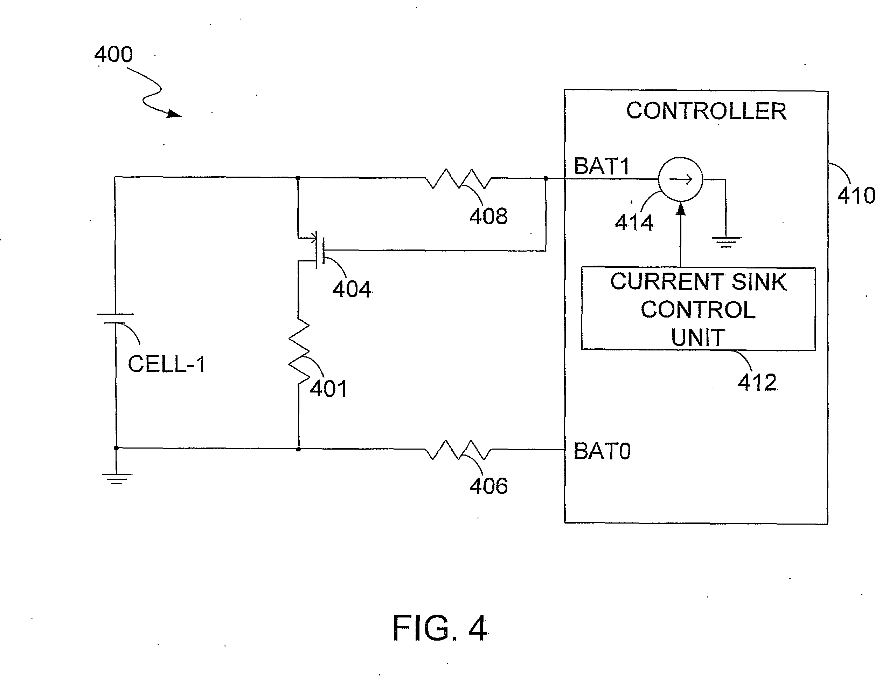

FIG. 4 illustrates a cell balancing circuit 400, in accordance with one embodiment of the present invention. The balancing circuit 400 in FIG. 4 utilizes a constant current regulator, e.g., an internal current sink 414, to control a conductance status of a shunt path of a cell cell-1, in one embodiment. In one embodiment, the current regulator 414 is coupled to the shunt path for producing a current to control a conductance status of the shunt path. The shunt path is conducted (turned on) in response to the current produced by the current regulator 414, in one embodiment.

The positive terminal (anode) of cell-1 in a battery pack is coupled to a controller 410 at the terminal BAT1 through a first resistor 408. The negative terminal (cathode) of cell-1 is coupled to the controller 410 at the terminal BAT0 through a second resistor 406. A shunt path is parallel-connected with cell-1 for enabling a shunt current of cell-1.

In one embodiment, the shunt path includes a bleeding (balancing) control switch 404 and a current limiting resistor 401 coupled in series. In one embodiment, the bleeding control switch 404 can be a P channel metal oxide semiconductor field effect transistor (PMOSFET). The bleeding control switch 404 can conduct the shunt path in response to the current produced by the current regulator 414. In one embodiment, the resistor 408 is coupled between the shunt path and the current sink 414. A conductance status of the bleeding control switch 404 is determined by its gate-to-source voltage Vgs, which is substantially equal to a voltage drop on the resistor 408, in the example of FIG. 4. In one embodiment, a controller 410 can be used to control a charging and/or discharging of the battery pack, and can be used to perform various protection functions (e.g., over-voltage protection, over-current protection, under-voltage protection, cell balancing) for the battery pack. The controller 410 can be integrated in the battery pack. The controller 410 can include a current regulator shown as a current sink 414 coupled between the terminal BAT1 and ground. The current sink 414 is operable for providing a sink current flowing from the positive terminal of cell-1 through the resistor 408 to ground and for controlling a conductance status of the shunt path. In other words, the current sink 414 sinks current from the positive terminal of cell-1. The sink current flows though the resistor 408, thereby producing a voltage drop on the resistor 408. As such, the conductance status of the shunt path can be determined by the voltage drop across the resistor 408.

The controller 410 may further include a current sink control unit 412 which is operable for controlling (e.g., enabling/disabling) the current sink 414. In one embodiment, the current sink control unit 412 monitors cell-1 and enables the current sink 414 if cell-1 is unbalanced. In one embodiment, cell-1 is unbalanced if a voltage of cell-1 is greater than a predetermined threshold. In an alternative embodiment, cell-1 is unbalanced if a difference between the voltage of cell-1 and a voltage of another cell (not shown in FIG. 4 for purposes of brevity and clarity) in the same battery pack is greater than a predetermined threshold. In an alternative embodiment, the shunt path of cell-1 can be built inside the controller 410.

For illustration purposes, it is assumed that a resistance of the resistor 408 is 1 KΩ, the sink current provided by the current sink 414 is 3mA, and the threshold voltage of the bleeding control switch 404 is -1V. However, the cell balancing circuit in the present disclosure is not limited to such specific values.

In operation, if an unbalanced condition occurs (e.g., during a charging/discharging/standby phase of the battery pack), the current sink 414 can be enabled by the current sink control unit 412 to provide a sink current, e.g., 3mA, flowing from the positive terminal of cell-1 through the resistor 408 to ground. As such, the voltage drop on the resistor 408 is 3V. Therefore, the gate-to-source voltage Vgs of the bleeding control switch 404 is -3V and the bleeding control switch 404 is turned on, in one embodiment. Once the bleeding control switch 404 is turned on, the corresponding shunt path is conducted (turned on). As a result, a shunt current (balancing current) can flow through the shunt path, thus balancing cell-1 with other cells. For example, during a battery charging phase, if a shunt current is enabled for cell-1, part of the charging current of cell-1 can be shunted away via the shunt path, thus charging of cell-1 can be slowed down, and the cell unbalance can be reduced/eliminated after balancing for a time period. Such time period can be determined by the current sink control unit 412, in one embodiment.

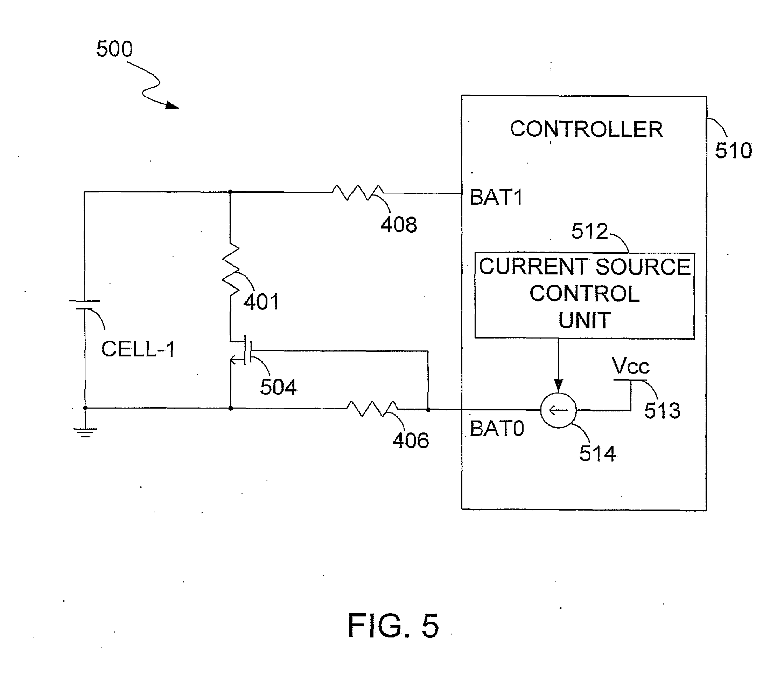

FIG. 5 illustrates a cell balancing circuit 500, in accordance with one embodiment of the present invention. Elements labeled the same as in FIG. 4 have similar functions. The balancing circuit 500 in FIG. 5 utilizes a constant current regulator, e.g., an internal current source 514 to control a conductance status of a shunt path of a cell cell-1 in a battery pack, in one embodiment. In one embodiment, the current regulator 514 is coupled to the shunt path for producing a current to control a conductance status of the shunt path. The shunt path is conducted (turned on) in response to the current produced by the current regulator 514, in one embodiment.

In one embodiment, a bleeding control switch 504 can be an N channel metal oxide semiconductor field effect transistor (NMOSFET). The bleeding control switch 504 can conduct the shunt path in response to the current produced by the current regulator 514. The positive terminal of cell-1 is coupled to a controller 510 at the terminal BAT1 through a first resistor 408. The negative terminal of cell-1 is coupled to the controller 510 at the terminal BAT0 through a second resistor 406. A conductance status of the bleeding control switch 504 is determined by its gate-to-source voltage Vgs, which is substantially equal to a voltage drop on the resistor 406, in the example of FIG. 5. In one embodiment, the controller 510 can be used to control a charging and/or discharging of the battery pack, and can be used to perform various protection functions (e.g., over-voltage protection, over-current protection, under-voltage protection, cell balancing) for the battery pack. The controller 510 can be integrated in the battery pack. In one embodiment, the controller 510 can include a current regulator shown as a current source 514 which is coupled between the terminal BAT0 and a power supply Vcc 513. The current source 514 is operable for providing a source current flowing from the power supply 513 through the resistor 406 to the negative terminal of cell-1 and for controlling a conductance status of the shunt path. In other words, the current source 514 sources current to the negative terminal of cell-1. The source current flows through the resistor 406, thereby producing a voltage drop on the resistor 406. As such, the conductance status of the shunt path can be determined by the voltage drop across the resistor 406.

The controller 510 may further include a current source control unit 512 which is operable for controlling (e.g., enabling/disabling) the current source 514. In one embodiment, the current source control unit 512 monitors cell-1 and enables the current source 514 if cell-1 is unbalanced. In one embodiment, cell-1 is unbalanced if a voltage of cell-1 is greater than a predetermined threshold. In an alternative embodiment, cell-1 is unbalanced if a difference between the voltage of cell-1 and a voltage of another cell (not shown in FIG. 5 for purposes of brevity and clarity) in the same battery pack is greater than a predetermined threshold. In an alternate embodiment, the shunt path of cell-1 can be built inside the controller 510.

For illustration purposes, it is assumed that a resistance of resistor 406 is 1KΩ, the source current provided by the current source 514 is 3mA, and the threshold voltage of the bleeding control switch 504 is 1V. However, the cell balancing circuit in the present disclosure is not limited to such specific values.

If an unbalanced condition occurs, the current source 514 can be enabled by the current source control unit 512 to provide a source current, e.g., 3mA, flowing from the power supply 513 to the negative terminal of cell-1 through the resistor 406. As such, the voltage drop across the resistor 406 is 3V. Therefore, the gate-to-source voltage Vgs of the bleeding control switch 504 is 3V and the bleeding control switch 504 is turned on, in one embodiment. Once the bleeding control switch 504 is turned on, the corresponding shunt path is conducted (turned on). Consequently, a shunt current (balancing current) can flow through the shunt path, thus balancing the cell voltages in the battery pack. A bleeding time period can be determined by the current source control unit 512, in one embodiment.

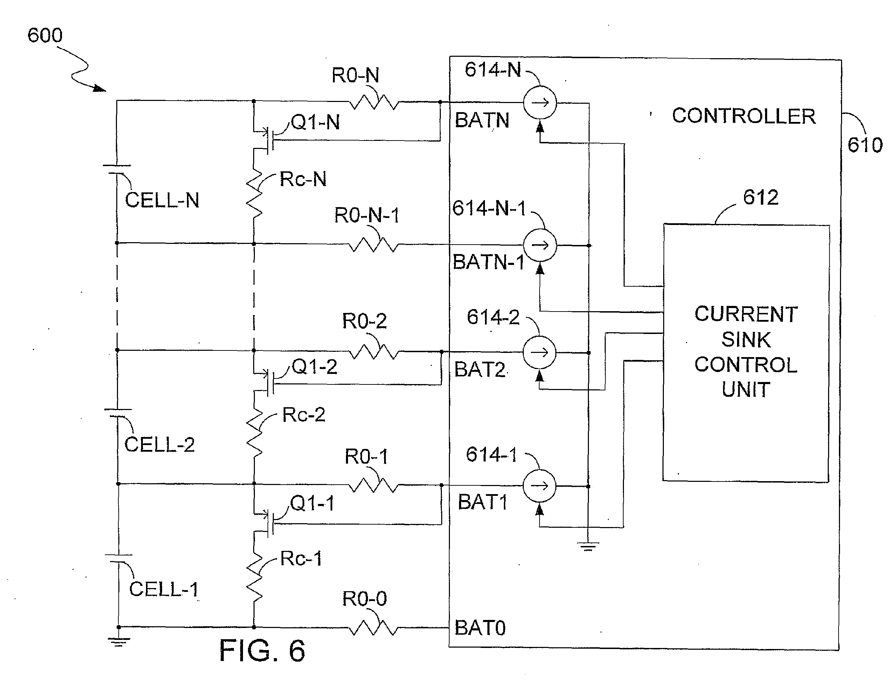

FIG. 6 illustrates a cell balancing circuit for balancing a group of series-connected cells cell-1 ~ cell-N in a battery pack, in accordance with one embodiment of the present invention. Cell-1 ~ cell-N are coupled in series. Not all of the cells are shown in FIG. 6 for purposes of brevity and clarity. A plurality of shunt paths are coupled to the cells cell-1 ~ cell-N in parallel respectively, and each of the shunt paths is operable for enabling a shunt current of a corresponding cell. In one embodiment, each shunt path can include a corresponding bleeding control switch Q1-1 ~ Q1-N and a corresponding resistor Rc-1 - Rc-N coupled in series. Therefore, a conductance status of a shunt path is determined by a conductance status of a corresponding bleeding control switch Q1-1 ~ Q1-N. Each of the bleeding control switches Q1-1 ~ Q1-N can be a PMOSFET. Not all of the bleeding control switches and resistors are shown in FIG. 6 for purposes of brevity and clarity.

A controller 610 is coupled to the plurality of cells cell-1 ~ cell-N for balancing the plurality of cells cell-1 ~ cell-N. The controller 610 comprises a plurality of current regulators, e.g., current sinks 614-1 - 614-N, which are coupled to the plurality of shunt paths respectively. Each of the current regulators 614-1 ~ 614-N is operable for producing a current flowing from a positive terminal of a corresponding cell to ground to control a conductance status of a corresponding shunt path, and the corresponding shunt path is conducted (turned on) in response to the current. Each bleeding control switch Q1-1 ~ Q1-N can conduct (turn on) a corresponding shunt path in response to the current produced from a corresponding current regulator 614-1 - 614-N. Terminals of the cells cell-1 ~ cell-N are coupled to the controller 610 at terminals BAT0 ~ BATN through resistors R0-0 ~ R0-N respectively. In one embodiment, terminals BAT1 ~ BATN are coupled to ground through current sinks 614-1 ~ 614-N in the controller 610. Not all of the terminals, resistors, and current sinks are shown in FIG. 6 for purposes of brevity and clarity. In one embodiment, each of the current regulators 614-1 ~ 614-N is operable for producing a current flowing through a corresponding resistor R0-1 ~ R0-N, which produces a voltage drop on the corresponding resistor R0-1 ~ R0-N. The conductance status of a corresponding bleeding control switch Q1-1 ~ Q1-N is determined by a voltage drop on the corresponding resistor R0-1 ~ R0-N, in one embodiment.

In one embodiment, the controller 610 can include a current sink control unit 612 which is operable for controlling current sinks 614-1 - 614-N. In one embodiment, the current sink control unit 612 in the controller 610 enables a corresponding current sink 614-1 - 614-N if a corresponding cell cell-1 ~ cell-N is unbalanced. The current sinks 614-1 - 614-N can be enabled or disabled independently or simultaneously by the current sink control unit 612. Consequently, the balancing circuit can be operable for balancing the group of cells according to the state of each cell.

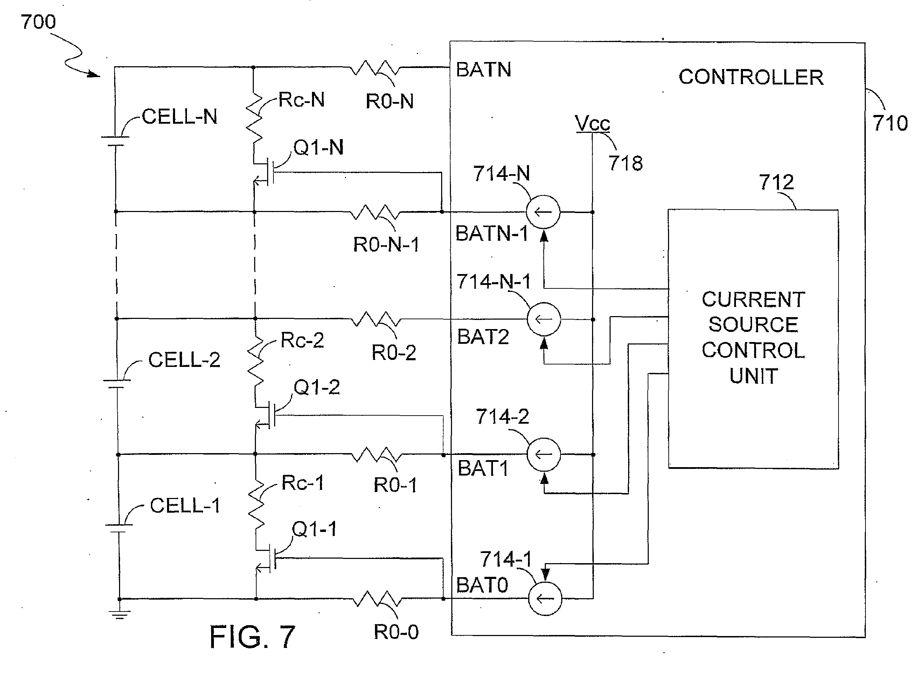

FIG. 7 illustrates a cell balancing circuit for balancing a group of series-connected cells cell-1 ~ cell-N in a battery pack, in accordance with one embodiment of the present invention. Cell-1 ~ cell-N are coupled in series. Not all of the cells are shown in FIG. 7 for purposes of brevity and clarity. A plurality of shunt paths are coupled to the cells cell-1 ~ cell-N in parallel respectively, and each of the shunt paths is operable for enabling a shunt current of a corresponding cell. In one embodiment, each shunt path can include a corresponding bleeding control switch Q1-1 ~ Q1-N and a resistor Rc-1 - Rc-N coupled in series. Therefore, a conductance status of a shunt path is determined by a conductance status of a corresponding bleeding control switch Q1-1 ~ Q1-N. Each of the bleeding control switches Q1-1 ~ Q1-N can be an NMOSFET. Not all of the bleeding control switches and resistors are shown in FIG. 7 for purposes of brevity and clarity.

A controller 710 is coupled to the plurality of cells cell-1 ~ cell-N for balancing the plurality of cells cell-1 ~ cell-N. The controller 710 comprises a plurality of current regulators, e.g., current sources 714-1 ~ 714-N, which are coupled to the plurality of shunt paths respectively. Each of the current regulators 714-1 ~ 714-N is operable for producing a current flowing from a power supply 718 to a negative terminal of a corresponding cell to control a conductance status of a corresponding shunt path, and the corresponding shunt path is conducted (turned on) in response to the current. Each bleeding control switch Q1-1 ~ Q1-N can conduct (turn on) a corresponding shunt path in response to the current produced from a corresponding current regulator 714-1 ~ 714-N. Terminals of the cells cell-1 ~ cell-N are coupled to the controller 710 at terminals BAT0 ~ BATN through resistors R0-0 ~ R0-N respectively. In one embodiment, terminals BAT0~ BATN-1 are coupled to a power supply Vcc 718 through current sources 714-1 ~ 714-N in the controller 710. Not all of the terminals, resistors, and current sources are shown in FIG. 7 for purposes of brevity and clarity. In one embodiment, each of the current regulators 714-1 ~ 714-N is operable for producing a current flowing through a corresponding resistor R0-0 ~ RO-N-1, which produces a voltage drop on the corresponding resistor R0-0 ~ RO-N-1. The conductance status of a corresponding bleeding control switch Q1-1 ~ Q1-N is determined by a voltage drop on the corresponding resistor R0-0 ~ RO-N-1, in one embodiment.

In one embodiment, the controller 710 can include a current source control unit 712 which is operable for controlling current source 714-1 ~ 714-N. In one embodiment, the current source control unit 712 in the controller 710 enables a corresponding current source 714-1 ~ 714-N if a corresponding cell cell-1 ~ cell-N is unbalanced. The current source 714-1 ~ 714-N can be enabled or disabled independently or simultaneously by the current source control unit 712. Consequently, the balancing circuit can be operable for balancing a group of cells according to the state of each cell.

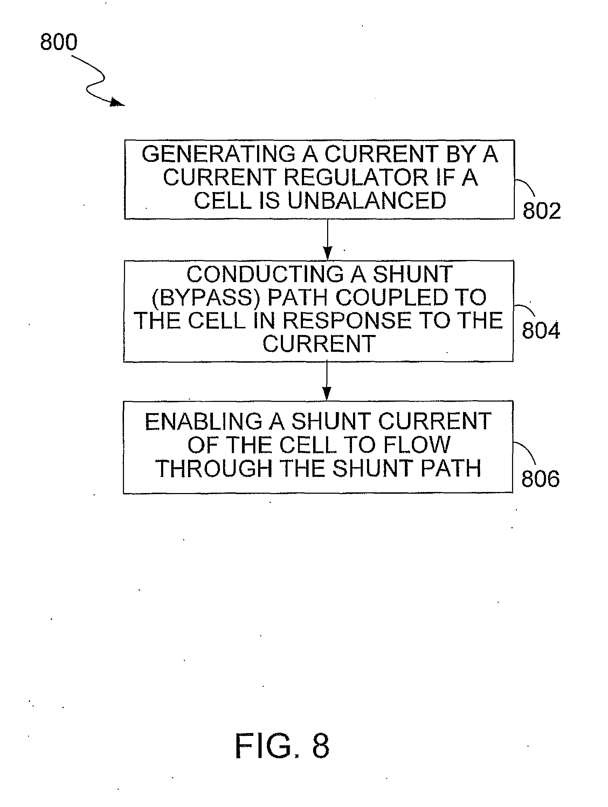

FIG. 8 illustrates a flowchart 800 of a method for balancing a cell, in accordance with one embodiment of the present invention. FIG. 8 is described in combination with FIG. 4 and 5. In block 802, a current is generated by a current regulator, e.g., a current sink 414 or a current source 514, if a cell cell-1 is unbalanced. As such, a voltage drop on a resistor 408/406 coupled between the shunt path and the current regulator can be produced (step not shown in FIG. 8). In one embodiment, a bleeding control switch 404/504 can be turned on in response to the voltage drop on the resistor 408/406 (step not shown in FIG. 8). Therefore, in block 804, a shunt path coupled to cell-1 is conducted (turned on) in response to the current generated by the current regulator. In block 806, a shunt current is enabled to flow through the shunt path.

The PMOSFET and NMOSFET used in the above embodiments can be replaced by any other type of switches whose conductance status can be controlled by a voltage drop, without departing from the scope of the present disclosure. The resistor can also be replaced by any other type of components with resistance or impedance, across which a voltage drop can be developed due to a current flow, without departing from the scope of the present disclosure. The present invention intends to cover those equivalent embodiments.

Advantageously, according to the present invention, extra pins for controlling shunt paths are not needed, such that the cost can be reduced. Furthermore, cell balancing circuits in the present invention can be applicable for different types of battery cells, because a conductance status of a bleeding control switches is not affected by a cell voltage. In one embodiment, the present invention is further capable of simultaneously balancing neighboring cells. According to one embodiment of the present invention, a current regulator generates currents with the same direction either flow into the controller (when current sinks are used as shown in FIG. 6) or flow out of the controller (when current sources are used as shown in FIG. 7). Therefore, there is no confliction of current direction. Consequently, multiple cells, no matter neighboring cells or non-neighboring cells, can be simultaneously balanced by a single controller, in one embodiment. The cell balancing circuits can be used in battery charging and battery discharging, stand-by conditions, in one embodiment.

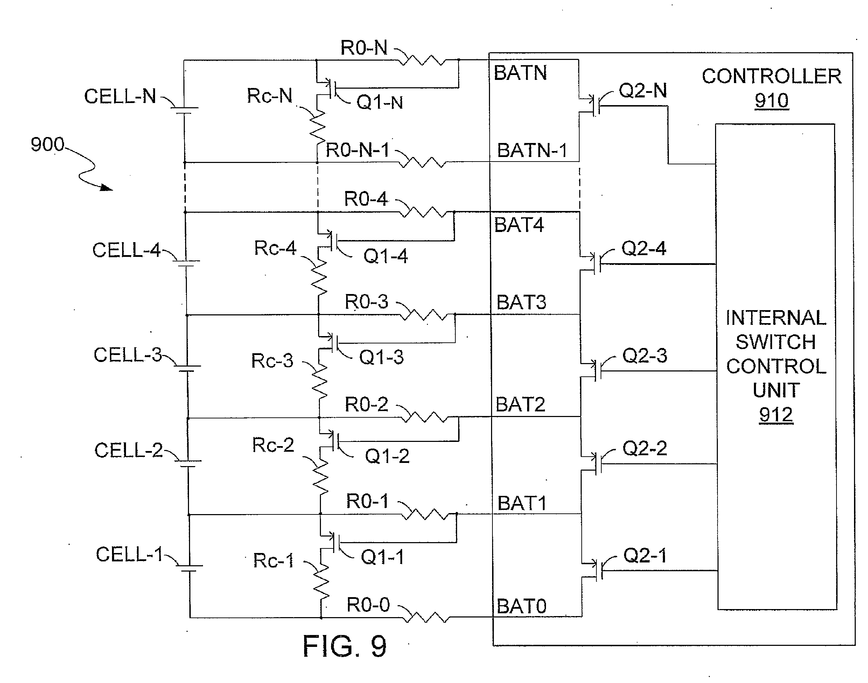

FIG. 9 illustrates a cell balancing circuit 900 for balancing a group of series-connected cells cell-1 ~ cell-N in a battery pack, in accordance with one embodiment of the present invention. Not all of the cells are shown in FIG. 9 for purposes of brevity and clarity. The balancing circuit 900 in the example of FIG. 9 includes a controller 910 which is operable for balancing cell-1 ~ cell-N using a time-multiplex algorithm to avoid a confliction of current direction that may occur in FIG. 2.

The cell balancing circuit 900 includes a plurality of shunt paths coupled to cell-1 ~ cell-N in parallel respectively. Each shunt path is operable for enabling a shunt current of a corresponding cell. In one embodiment, each shunt path can include a corresponding bleeding control switch Q1-1 ~ Q1-N and a corresponding resistor Rc-1 - Rc-N coupled in series. For example, the shunt path coupled to cell-1 includes a bleeding control switch Q1-1 and a resistor Rc-1. Not all of the bleeding control switches and resistors are shown in FIG. 9 for purposes of brevity and clarity. A conductance status of a shunt path can be determined by a conductance status of a corresponding bleeding control switch Q1-1 ~ Q1-N. In one embodiment, each of the bleeding control switches Q1-1 ~ Q1-N can be a P channel metal oxide semiconductor field effect transistor (PMOSFET). A conductance status of a bleeding control switch Q1-1 ~ Q1-N is determined by its gate-to-source voltage Vgs, which is substantially equal to a voltage drop on a corresponding resistor R0-1 ~ R0-N.

Terminals of cell-1 ~ cell-N are coupled to the controller 910 at terminals BAT0 ~ BATN through resistors R0-0 ~ R0-N respectively. In one embodiment, the controller 910 includes a plurality of internal switches Q2-1 - Q2-N. Each of the internal switches Q2-1 - Q2-N is coupled between two corresponding terminals of the controller 910. For example, internal switch Q2-1 is coupled between terminals BAT0 and BAT1. Internal switch Q2-2 is coupled between terminals BAT1 and BAT2. Internal switch Q2-N is coupled between terminals BATN-1 and BATN. An on/off status of each of the internal switches Q2-1 - Q2-N can determine a conductance status of a corresponding shunt path. Not all of the internal switches are shown in FIG. 9 for purposes of brevity and clarity. In one embodiment, the controller 910 can further include an internal switch control unit 912 for controlling the on/off status of each of the internal switches Q2-1 - Q2-N.

In operation, if cell-1 needs to be balanced (e.g., when the difference between the cell voltages of cell-1 and another cell is greater than a predetermined threshold), a corresponding internal switch Q2-1 can be turned on (e.g., by the internal switch control unit 912) to enable a first control current flowing from a positive terminal of cell-1 through the internal switch Q2-1 to a negative terminal of cell-1. As a result, a voltage drop can be generated across the resistor R0-1, such that the bleeding control switch Q1-1 can be turned on in response to the voltage drop. When the bleeding control switch Q1-1 is turned on, the corresponding shunt path coupled to cell-1 is conducted. A shunt current can flow through the shunt path, thus balancing cell-1 with the other cells. For example, during a battery charging phase, if a shunt current is enabled for the cell-1, part of the charging current of the cell-1 can be shunted away via the shunt path, thus charging of the cell-1 can be slowed down.

Similarly, if cell-2 needs to be balanced, a corresponding internal switch Q2-2 can be turned on (e.g., by the internal switch control unit 912) to enable a second control current flowing from a positive terminal of cell-2 through the internal switch Q2-2 to a negative terminal of cell-2. As a result, a voltage drop can be generated across the resistor R0-2, such that the bleeding control switch Q1-2 can be turned on in response to the voltage drop.

To balance cell-1 ~ cell-N by the controller 910 using the time-multiplex algorithm, cell-1 ~ cell-N can be divided into multiple groups, e.g., a first group and a second group, in one embodiment. Assume that in the example of FIG. 9, the total number of cells (the number N) is an even number. The first group can include odd numbered cells cell-1, cell-3, cell-5, ...and cell-N-1. The second group can include even numbered cells cell-2, cell-4, cell-6, ...and cell-N. As such, each cell from the first group is adjacent to at least one cell from the second group. Similarly, each cell from the second group is adjacent to at least one cell from the first group.

In operation, the controller 910 can alternately balance the unbalanced cells from the first group and the unbalanced cells from the second group. More specifically, the controller 910 can control the on/off status of the internal switches Q2-1 - Q2-N through the internal switch control unit 912 to conduct the shunt paths coupled to the unbalanced cells from the first group in a first series of discrete time slots, and to conduct the shunt paths coupled to the unbalanced cells from the second group in a second series of discrete time slots. The first series of discrete time slots and the second series of discrete time slots are mutually exclusive, in one embodiment. Advantageously, by alternately balancing the unbalanced cells from the first group and the unbalanced cells from the second group, a confliction of the current direction of the control current that may occur in the cell balancing circuit in FIG. 2 can be avoided.

The PMOSFET used in the above embodiments can be replaced by any other type of switches whose conductance status can be controlled by a voltage drop, without departing from the scope of the present disclosure. The resistor can also be replaced by any other type of components with resistance or impedance, across which a voltage drop can be developed due to a current flow, without departing from the scope of the present disclosure. The present invention intends to cover those equivalent embodiments.

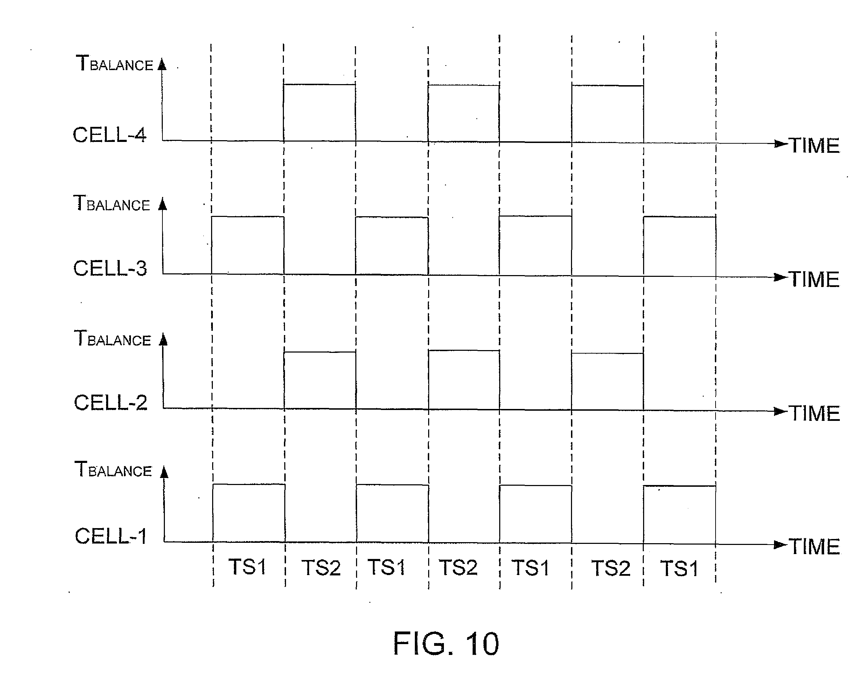

FIG. 10 illustrates an example of the time multiplex algorithm used by the controller in FIG. 9 for alternately balancing the unbalanced cells from the first group and the unbalanced cells from the second group. FIG. 10 is described in combination with FIG. 9.

Assume that cell-1, cell-2, cell-3 and cell-4 are unbalanced. Cell-1 and cell-3 belong to the first group, and cell-2 and cell-4 belong to the second group. In one embodiment, a first series of discrete time slots which include the time slots labeled as TS1 can be assigned to the first group, and a second series of discrete time slots which include the time slots labeled as TS2 can be assigned to the second group. As shown in FIG. 10, the first series of discrete time slots and the second series of discrete time slots are mutually exclusive.

More specifically, in the time slots labeled as TS1, the controller 910 selects the first group for balancing, and stops balancing the second group. In one embodiment, the controller 910 can conduct the shunt paths coupled to cell-1 and cell-3 to balance cell-1 and cell-3, and cut off the shunt paths coupled to cell-2 and cell-4 to stop balancing cell-2 and cell-4 during time slots TS1. In one embodiment, the controller 910 can turn on internal switches Q2-1 and Q2-3 so as to conduct the shunt paths coupled to cell-1 and cell-3 respectively.

When the internal switch Q2-1 is turned on, a control current can be enabled to flow from the positive terminal of cell-1 through the resistor R0-1, the internal switch Q2-1, and the resistor R0-0 to the negative terminal of cell-1. As such, a voltage drop can be generated across the resistor R0-1. The bleeding control switch Q1-1 can be turned on in response to the voltage drop across the resistor R0-1, such that a shunt current can be enabled for cell-1.

When the internal switch Q2-3 is turned on, a control current can be enabled to flow from the positive terminal of cell-3 through the resistor R0-3, the internal switch Q2-3, and the resistor R0-2 to the negative terminal of cell-3. As such, a voltage drop can be generated across the resistor R0-3. The bleeding control switch Q1-3 can be turned on in response to the voltage drop across the resistor R0-3, such that a shunt current can be enabled for cell-3.

In the time slots labeled as TS2, the controller 910 selects the second group for balancing, and stops balancing the first group. In one embodiment, the controller 910 can conduct the shunt paths coupled to cell-2 and cell-4 to balance cell-2 and cell-4, and cut off the shunt paths coupled to cell-1 and cell-3 to stop balancing cell-1 and cell-3. In one embodiment, the controller 910 can turn on internal switches Q2-2 and Q2-4 so as to conduct the shunt paths coupled to cell-2 and cell-4 respectively.

When the internal switch Q2-2 is turned on, a control current can be enabled to flow from the positive terminal of cell-2 through the resistor R0-2, the internal switch Q2-2, and the resistor R0-1 to the negative terminal of cell-2. As such, a voltage drop can be generated across the resistor R0-2. The bleeding control switch Q1-2 can be turned on in response to the voltage drop across the resistor R0-2, such that a shunt current can be enabled for cell-2.

When the internal switch Q2-4 is turned on, a control current can be enabled to flow from the positive terminal of cell-4 through the resistor R0-4, the internal switch Q2-4, and the resistor R0-3 to the negative terminal of cell-4. As such, a voltage drop can be generated across the resistor R0-4. The bleeding control switch Q1-4 can be turned on in response to the voltage drop across the resistor R0-4, such that a shunt current can be enabled for cell-4.

By using this time-multiplex algorithm, the shunt currents of the adjacent cells can be enabled alternately. Thus, a confliction of the current direction can be avoided. For example, consider the control current flowing through the resistor R0-1. In time slots labeled as TS1, a control current flows from the positive terminal of cell-1 through the resistor R0-1 to the negative terminal of cell-1 (flows into the controller 910) to conduct the shunt path of cell-1. In time slots labeled as TS2, a control current flows from the positive terminal of cell-2 through the resistor R0-1 to the negative terminal of cell-2 (flows out of the controller 910) to conduct the shunt path of cell-2.

In one embodiment, the length of each time slot can be relatively short, such as 5 ms. As a result, unbalanced cells from the first group and unbalanced cells from the second group can be balanced substantially at the same time while a confliction of current direction of the control current can be avoided.

The time multiplex algorithm described above can be used by various kinds of cell balancing circuits which can have different configurations and are not limited to the configuration as shown in the example of FIG. 9.

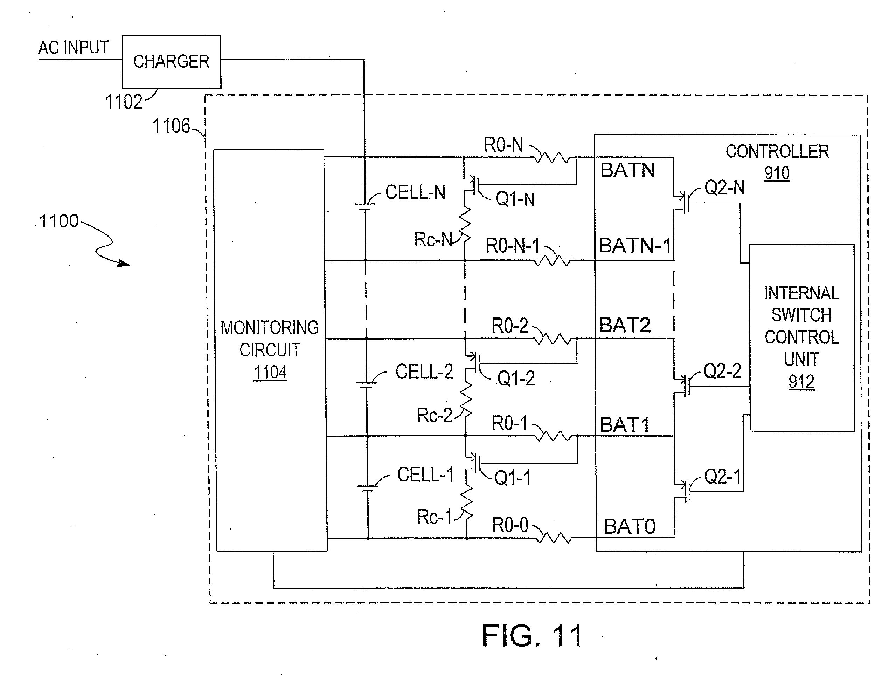

FIG. 11 illustrates a battery management system 1100, in accordance with one embodiment of the present invention. Elements labeled the same as in FIG. 9 have similar functions.

The battery management system 1100 includes a charger 1102 for charging a plurality of cells cell-1 ~ cell-N in a battery pack 1106, a monitoring circuit 1104 for monitoring cells cell-1 ~ cell-N and detecting an unbalanced condition, and a controller 910 for balancing cell-1 ~ cell-N using the time-multiplex algorithm illustrated in FIG. 10. Cell-1 ~ cell-N can be divided into a plurality of groups, e.g., a first group comprising odd numbered cells and a second group comprising even numbered cells. In one embodiment, the controller 910 can further include an internal switch control unit 912 for controlling a plurality of internal switches Q2-1 ~ Q2-2 to conduct a plurality of shunt paths respectively coupled to cell-1 ~ cell-N. In the example of FIG. 11, the monitoring circuit 1104 is implemented out of the controller 910. In another embodiment, the monitoring circuit 1104 can be built inside in the controller 910.

In operation, the charger 1102 charges cell-1 ~ cell-N. Unbalanced conditions may occur during charging. The monitoring circuit 1104 monitors the status, e.g., cell voltages, of each cell and transmits the monitored information to the controller 910. In one embodiment, a cell is unbalanced if a voltage of the cell is greater than a predetermined threshold. In an alternative embodiment, a cell is unbalanced if a difference between the voltage of the cell and a voltage of another cell in the same battery pack is greater than a predetermined threshold.

The controller 910 can use the time-multiplex algorithm illustrated in FIG. 10 to alternately balance the unbalanced cells from the first group and the unbalanced cells from the second group. In one embodiment, to balance an unbalanced cell, the controller 910 can conduct a corresponding shunt path to enable a shunt current. In one embodiment, the controller 910 can turn on an internal switch, e.g., internal switch Q2-1 - Q2-N, to enable a control current flowing through a resistor, e.g., resistor R0-1 ~ R0-N, to generate a voltage drop across the resistor. A corresponding bleeding control switch, e.g., bleeding control switch Rc-1 - Rc-N, in the shunt path can be turned on in response to the voltage drop, such that the shunt path can be conducted.

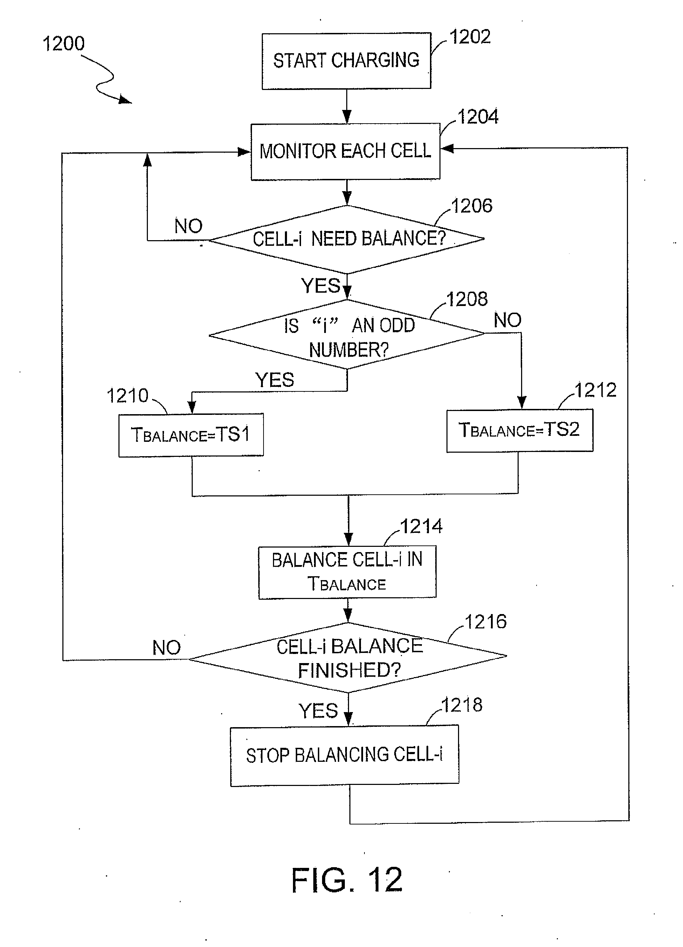

FIG. 12 illustrates a flowchart 1200 of a method for balancing a plurality of cells, in accordance with one embodiment of the present invention. FIG. 12 is described in combination with FIG. 10 and FIG. 11. In the example of FIG. 12, cell balancing during battery charging is illustrated. However, the cell balancing in the present invention can be used in many other operation phases such as battery discharging and battery stand-by phases.

In block 1202, the charger 1102 starts to charge a plurality of cells cell-1 ~ cell-N. Unbalanced conditions may occur during charging. In block 1204, each cell is monitored, e.g., by a monitoring circuit 1104. The monitored information is transmitted to a controller 910. In block 1206, the controller 910 can determine if a cell is unbalanced with other cells. In one embodiment, a cell is unbalanced if a voltage of the cell is greater than a predetermined threshold. In another embodiment, a cell is unbalanced if a voltage difference between a first cell voltage of the cell and a second cell voltage of another cell is greater than a predetermined threshold.

If there are no cells need to be balanced, the flowchart 1200 goes back to block 1204 to continue monitoring each cell. If a cell, e.g., cell-i, needs to be balanced, the flowchart 1200 goes to block 1208 to determine whether cell-i belongs to a first group or to a second group. The controller 910 can balance the cell using the time multiplex algorithm illustrated in FIG. 10 based on a determination of whether cell-i belongs to the first group orto the second group. In block 1208, if cell-i belongs to the first group (e.g., when i is an odd number), the flowchart 1200 goes to block 1210 and the balanced time Tbalance for cell-i is assigned with a first series of discrete time slots, such as the time slots labeled as TS1 in FIG. 10. In block 1208, if cell-i belongs to the second group (e.g., when i is an even number), the flowchart 1200 goes to block 1212 and the balanced time Tbalance for cell-i is assigned with a second series of discrete time slots, such as the time slots labeled as TS2 in FIG. 10. The first series of discrete time slots and the second series of discrete time slots are mutually exclusive. The flowchart 1200 goes to block 1214 to balance cell-i in the balanced time Tbalance.

In order to balance cell-i, a shunt path coupled to cell-i is conducted to enable a shunt current flowing through the shunt path, in one embodiment. In block 1216, cell-i is monitored, e.g., by the monitoring circuit 1104 to determine if the balancing for cell-i is finished. If cell-i still needs balancing, the flowchart 1200 goes back to block 1204 to continue monitoring each cell. If cell-i is balanced with other cells, the flowchart 1200 goes to block 1218 to terminate the balancing of cell-i. Subsequently, the flowchart 1200 can go back to block 1204 to continue monitoring each cell.

Advantageously, according to one embodiment of the present invention, extra pins for controlling shunt paths are omitted, such that the cost can be reduced. Furthermore, the confliction of current direction can be avoided by using the time multiplex algorithm. Consequently, multiple cells can be balanced substantially at the same time by a single controller, in one embodiment. The cell balancing circuits can be used in battery charging, battery discharging or in stand-by conditions, in one embodiment.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Other modifications, variations, and alternatives are also possible. Accordingly, the claims are intended to cover all such equivalents.

## Claims

1. A cell balancing circuit for balancing a first cell and a second cell adjacent to said first cell, said cell balancing circuit comprising:
a first shunt path coupled to said first cell in parallel for enabling a shunt current of said first cell;
a second shunt path coupled to said second cell in parallel for enabling a shunt current of said second cell; and
a controller coupled to said first shunt path and said second shunt path and operable for alternately conducting said first shunt path and said second shunt path if said first cell and said second cell are unbalanced.

2. The cell balancing circuit of claim 1, wherein said controller is operable for conducting said first shunt path in a first series of discrete time slots, and for conducting said second shunt path in a second series of discrete time slots, wherein said first series of discrete time slots and said second series of discrete time slots are mutually exclusive.

3. The cell balancing circuit of claim 1, wherein said controller is operable for conducting said first shunt path and cutting off said second shunt path in a first time slot, and for cutting off said first shunt path and conducting said second shunt path in a second time slot.

4. The cell balancing circuit of claim 1, wherein said controller comprises:
a first switch coupled to said first shunt path for controlling a conductance status of said first shunt path by enabling a first control current flowing through said first switch;
a second switch coupled to said second shunt path for controlling a conductance status of said second shunt path by enabling a second control current flowing through said second switch,
wherein said controller is operable for alternately turning on said first internal switch and said second switch.

5. The cell balancing circuit of claim 4, further comprising:
a first resistor coupled between said first shunt path and said first internal switch,
wherein said first control current flows through said first resistor to produce a voltage drop on said first resistor, and wherein a conductance status of said first shunt path is determined by said voltage drop.

6. The cell balancing circuit of claim 5, wherein said first shunt path comprises a bleeding control switch, and wherein a conductance status of said bleeding control switch is determined by said voltage drop.

7. A battery management system comprising:
a charger for charging a plurality of cells comprising a first cell and a second cell adjacent to said first cell;
a monitoring circuit coupled to said cells for monitoring said cells and for detecting an unbalanced condition of said cells; and
a cell balancing circuit coupled to said monitoring circuit for balancing said cells, said cell balancing circuit comprising:
a first shunt path coupled to said first cell in parallel for enabling a shunt current of said first cell;
a second shunt path coupled to said second cell in parallel for enabling a shunt current of said second cell; and
a controller coupled to said first shunt path and said second shunt path and operable for alternately conducting said first shunt path and said second shunt path if said first cell and said second cell are unbalanced.

8. The battery management system of claim 7, wherein said controller is operable for conducting said first shunt path in a first series of discrete time slots, and for conducting said second shunt path in a second series of discrete time slots, wherein said first series of discrete time slots and said second series of discrete time slots are mutually exclusive.

9. The battery management system of claim 7, wherein said controller is operable for conducting said first shunt path and cutting off said second shunt path in a first time slot, and for cutting off said first shunt path and conducting said second shunt path in a second time slot.

10. The battery management system of claim 7, wherein said controller further comprising:
a first switch coupled to said first shunt path for controlling a conductance status of said first shunt path by enabling a first control current flowing from a positive terminal of said first cell through said first switch to a negative terminal of said first cell;
a second switch coupled to said second shunt path for controlling a conductance status of said second shunt path by enabling a second control current flowing from a positive terminal of said second cell through said second switch to a negative terminal of said second cell,
wherein said controller is operable for alternately turning on said first switch and said second switch.

11. The battery management system of claim 10, further comprising:
a first resistor coupled between said first shunt path and said first internal switch,
wherein said first control current flows through said first resistor to produce a voltage drop on said first resistor, and wherein a conductance status of said first shunt path is determined by said voltage drop.

12. The battery management system of claim 11, wherein said first shunt path comprises a bleeding control switch, and wherein a conductance status of said bleeding control switch is determined by said voltage drop.

13. A method for balancing a plurality of cells, comprising:
dividing said plurality of cells into a first group and a second group, wherein each cell from said first group is adjacent to at least one cell from said second group;
monitoring an unbalanced condition of said plurality of cells; and
alternately enabling shunt current for a first plurality of unbalanced cells from said first group and shunt current for a second plurality of unbalanced cells from said second group.

14. The method of claim 13, further comprising:
balancing said first plurality of unbalanced cells from said first group in a first series of discrete time slots; and
balancing said second plurality of unbalanced cells from said second group in a second series of discrete time slots,
wherein said first series of discrete time slots and said second series of discrete time slots are mutually exclusive.

15. The method of claim 13, further comprising:
conducting a plurality of shunt paths respectively coupled to said first plurality of unbalanced cells from said first group in a first series of discrete time slots; and
conducting a plurality of shunt paths respectively coupled to said second plurality of unbalanced cells from said second group in a second series of discrete time slots,
wherein said first series of discrete time slots and said second series of discrete time slots are mutually exclusive.

16. The method of claim 13, further comprising:
alternately enabling a first control current corresponding to a first cell and a second control current corresponding to a second cell;
conducting a first shunt path coupled to said first cell in response to said first control current; and
conducting a second shunt path coupled to said second cell in response to said second control current.

17. The method of claim 16, further comprising:
producing a voltage drop on a resistor coupled to said first shunt path by said first control current,
wherein said first control current flows through said resistor.

18. The method of claim 17, further comprising:
turning on a bleeding control switch in said first shunt path in response to said voltage drop to conduct said first shunt path.

19. The method of claim 13, further comprising:
determining a cell is unbalanced if a voltage of said cell is greater than a predetermined threshold.

20. The method of claim 13, further comprising:
determining a cell is unbalanced if a voltage difference between a first cell voltage of said cell and a second cell voltage of another cell is greater than a predetermined threshold.
